# EUROPEAN PATENT APPLICATION

(11) **EP 1 986 381 A1**
(43) Date of publication of application: **29.10.2008**
(21) Application number: 07702243.2
(22) Date of filing: 01.02.2007
(51) Int. Cl.: H04L 12/58, G06F 15/16

(54) **A METHOD AND SYSTEM FOR IMPLEMENTING INSTANT COMMUNICATION**

(30) Priority: 15.02.2006 CN 200610007612
(71) Applicant: Alibaba Group Holding Limited, Grand Cayman (KY)
(72) Inventor: HUANG, Hangfei, Zhejiang 310099 (CN)
(74) Representative: Grünecker, Kinkeldey, Stockmair & Schwanhäusser Anwaltssozietät
(86) International application number: PCT/CN2007/000351
(87) International publication number: WO 2007/093112

(57) **Abstract**

The present invention provides an instant messaging method to establish a corresponding relationship between a browser application and a message port of an instant messaging server; start the browser application to establish a session with the message port of the instant messaging server; and, through the session, send to the instant messaging server an instant message intended to a communication party and receive from the instant messaging server an instant message sent by the communication party. Using the instant messaging server to provide a message port to a browser application enables a user who does not have instant messaging tools installed to do instant messaging with another party which has instant messaging tools installed, by simply starting the browser application. The invention significantly improves the convenience and user participation in instant messaging. Especially in electronic commerce, the present invention increases the extent of instant messaging between sellers and buyers while keeps it quick and easy for buyers, and expedites the electronic transactions.

## Description

This application claims priority from Chinese patent application, Application No. 200610007612.9, filed February 15, 2006, entitled "METHOD AND SYSTEM FOR INSTANT MESSAGING", and incorporates the Chinese patent application in its entirety by reference.

### TECHNICAL FIELD

The present invention relates to the fields of computer software and network communications, and particularly to applications accomplishing instant messaging when one party has not installed a network instant messaging tool.

### BACKGROUND ART

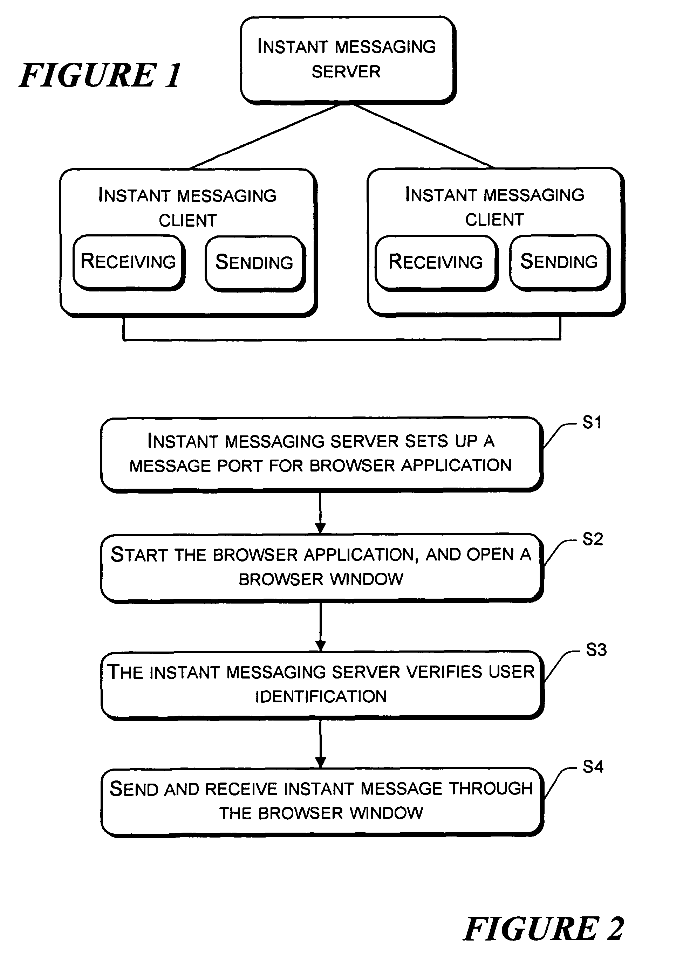

Referring to FIG. 1, illustrated is concept model of an existing generic instant messaging system. The system includes two parts: an instant messaging server, which is primarily responsible for providing storage of instant messages, forwarding messages, and delivering instant messages after an instant messaging user has become online; and instant messaging clients, which are primarily responsible for providing instant messaging editing and delivering services, and receiving, notifying and displaying instant messages.

In an actual instant messaging system, instant messaging clients can be divided to sending terminals and receiving terminals. To send an instant message by a sending terminal, there are two types of methods that can be used. According to the first type, if direct point-to-point connection can be established with the instant messaging receiving terminal, the sending terminal may directly send the instant message to the receiving terminal; according to the second type, if direct point-to-point connection cannot be established with the instant messaging receiving terminal due to certain restrictions of the network or regulations, the instant message may be sent to the instant messaging server to be forwarded. If the instant message receiving terminal is not online, the instant messaging server stores the received instant message and wait until the receiving terminal has become online to deliver the instant message.

The above existing instant messaging systems all require that both parties of the communication have instant messaging software or plug-ins installed in order to conduct instant messaging. If one of the parties doesn't have such installation, it cannot converse with the other party. If one needs to conduct instant messaging, one has to download and install instant messaging tools. Although traditional instant messaging tools satisfy general instant messaging needs, they may not be adequate in certain special conditions. For example, in the field of electronic commerce, typically only sellers install instant messaging tools for convenient communication of transaction information, while buyers who don't frequently shop online usually don't install instant messaging tools. Under such circumstances, if the buyer wants to communicate with the seller with regard to a certain product, the buyer is prevented from using instant messaging to communicate as a result of not having instant messaging tools installed. For many buyers, downloading and installing instant messaging tools can be burdensome. The situation is especially serious in electronic commerce which has many different kinds of unique instant messaging tools. Therefore, the development of instant messaging technology requires a solution to accomplish two-party instant messaging in situations where one of the parties does not have network instant messaging tools installed.

### DESCRIPTION OF THE INVENTION

Considering the above described problems, the present invention aims to provide a method for conducting instant messaging communication when one party has installed instant messaging tools, and the other party may perform instant messaging with the first party without having to install any tools or plug-ins.

An additional purpose of the present invention is to provide a method for conducting instant messaging communication by a party who has not installed network instant messaging tools. Relying on a cookie stored in browser, the party needs only a single click to realize instant messaging communication which otherwise would only be possible with installation of network instant messaging tools.

In order to solve the above technical problems, the present invention accomplishes the above goals using the following technical schemes.

The present invention discloses a method for instant messaging, including the following: establish a corresponding relationship between a browser application and a message port of instant messaging server; start the browser application to establish a session with the message port of the instant messaging server; use the session to send to the instant messaging server an instant message intended to a receiving party of communication, and to receive from the instant messaging server an instant message sent by the receiving party.

Preferably, the method for instant messaging includes, after starting the browser application, the following: verify by the instant messaging server the identification of the user who is using the browser application; upon successful verification, start a browser window for sending and receiving instant messages, and establish a session with the message port of the instant server.

Preferably, verification of the user identification specifically includes: check if the local computer used by the user has stored therein a cookie which contains the identification of the user; if yes, the verification is successful; if not, display an ID verification page to verify the identification based on the information entered by the user.

Preferably, the method for instant messaging includes, before verifying the identification of user, the following: determine whether the local computer used by the user has an instant messaging client installed; if yes, start the instant messaging client to conduct instant messaging with a communication party.

Preferably, the method for instant messaging further includes: specify the communication party to the instant messaging server when starting the browser application.

Preferably, specifying the communication party includes: send to the instant messaging server the ID of the communication party entered by the user through the browser window.

Preferably, specifying the communication party includes: set up on webpage a button for starting the browser application, wherein the button corresponds to the ID of the communication party; and send to the instant messaging server the ID of the communication party upon clicking the button by the user.

Preferably, if the communication party is online, the instant messaging server forwards the received instant message to the communication party; if the communication party is off-line, the instant messaging server stores the received instant message and waits until the communication party comes online to forward the instant message to the communication party.

The present invention also provides a system for conducting instant messaging, the system including an instant messaging server and instant messaging clients, and further including a browser application module connected to a message port of the instant messaging server. The browser application module is used for establishing a session with the message port, and, through the session, sending to the instant messaging server an instant message intended to a communication party and receiving from instant messaging server an instant message sent by the communication party.

Preferably, the instant messaging server further includes a verification module used for verifying the identification of the user, and, upon verification of the user identification, establishing a session with browser application module of the user.

Preferably, the browser application module includes a determination sub-module used for checking, before establishing the session with the message port, whether the local computer of the user has an instant messaging client installed, and if yes, starting the instant messaging client to interact with the communication party.

Preferably, the instant messaging server further includes message storage module used for storing the instant message sent by the browser application module to the communication party when the communication party is off-line, and sending the instant message to the communication party after the communication party has come online.

As illustrated in the above technical schemes, the present invention has the following advantages over the existing technology:

With the present invention, when one of the communication parties has instant messaging tools installed, the other party does not have to install any instant messaging tools or plug-ins, but can accomplish instant messaging communication with the first party using a browser window. For this reason, the present invention significantly improves the user convenience and user participation in instant messaging. Especially in electronic commerce, the present invention increases the extent of instant messaging between sellers and buyers while keeps the process quick and easy for buyers, thus speeding up transaction information exchange and expediting electronic transactions.

At checking whether the browser of the user has a stored cookie corresponding to the identity of the user before the user conducts instant messaging, some preferred embodiments of the present invention may reduce the time and complexity of user ID verification to assure the security of network instant messaging without losing convenience. Relying on the cookies stored in the browser, the user may accomplish by a single click operation two-party instant communication which is otherwise possible only by installing network instant messaging tools. Compared with existing technologies which requires users to download and install instant messaging tools, the present invention significantly improves the user convenience of instant messaging.

### DESCRIPTION OF DRAWINGS

FIG. 1 illustrates a concept model of existing instant messaging system.

FIG. 2 shows a flow chart of an instant messaging method in accordance with the present invention.

FIG. 3 shows a flow chart of an exemplary embodiment of the instant messaging method in accordance with the present invention.

FIG. 4 shows a flow chart of an exemplary embodiment of the instant messaging system in accordance with the present invention.

### EXEMPLARY EMBODIMENTS

The core of the present invention is to provide through an instant messaging server a message port to be used by an application on a browser, to enable a user without instant messaging tools installed to send and receive instant messages. Instant messaging communication with another communication party which has instant messaging tools installed may be accomplished by the user by simply starting the browser application. In other words, one party has no need to install any instant messaging tools in order to chat with a party who has already installed instant messaging tools and is online, or to leave a message to a party who has installed instant messaging tools but is off-line. Herein, an instant messaging tool includes instant messaging software, plug-ins etc.

The present invention is explained in further detail below using figures and exemplary embodiments.

FIG. 2 shows a flow chart of an instant messaging method in accordance with the present invention.

At step S1, instant messaging server sets up a message port for a browser application. The application may be understood in general to carry out a certain function or functions using program codes. In existing technologies, there are many types of browser applications. For example, browser-based search is a typical application. In an example of browser-based search, the server provides a search port, which can be called by the program codes on a website. The program codes send the search keywords of a user to the search port. Upon receiving the search keywords, the server obtains search results and returns the search results to the application on the webpage to complete a search function. In the present invention, an application may be added to a webpage on which instant messaging is to be started. The application corresponds to the message port of the instant messaging server. As the browser of the user's local computer displays the webpage, the user may start the application to send a message through the browser to the corresponding message port, receive a message from the instant messaging server and display the received message in a browser window. The application is also referred to as a browser application.

At step S2, the user starts the browser application to open a browser window.

As the user starts the browser application which corresponds to the message port of the instant messaging server, the operating system of the user's local computer may open a pop-up browser window, which establishes a session with the instant messaging server. The instant messaging server assigns a session ID to the session.

In general, a session refers to data exchange between a server and a browser during a period starting from the time a visitor connects to a server and starts to use messaging service to the time the visitor completes the usage and leaves the server. Each visitor individually receives a session identifier to record messages of a separate session. The operation mechanism of a session is similar to that of a cookie. In fact, session is a variation of cookie technology when used in an individual dialogue.

At step S3, the user sends and receives instant messages through the browser window using the session, accomplishing instant messaging with the other communication party.

As the user starts the application, the user may specify the other communication party to the instant messaging server. After the operating system of the user opens a browser window, the user may enter a message in an input box of the browser page and submit the message. Thereupon, the browser sends the message, the session ID and the ID of the other communication party to the message port of the instant messaging server. Likewise, upon seeing the message, the other communication party may reply through the instant messaging server. The instant messaging server finds the correct browser window of the user according to the session ID and sends the reply message to the browser of the user to be displayed in the browser window.

Understood simply, the present invention in practice moves the messaging of one party in a common existing two-party messaging method based on instant messaging software tools to a browser, such that the party does not need to download and install any messaging client, but can use the browser only to accomplish instant messaging. For the other party who has already installed instant messaging tools, the messaging process remains unchanged, making the present invention easy and convenient, suited for the user operation habits.

In step S2, after the user has started the application, an additional step S21 may be included such that the instant messaging server verifies the identity of the user, and upon successful verification opens a browser window for sending and receiving instant messages.

The instant messaging method including the steps S1, S2 and S3 allows anonymous user to use the browser application provided by the instant messaging server, and to send and receive instant messages through a browser window to accomplish instant messaging with another communication party. However, in view of the security of the communication between the user and the instant messaging server, the above additional step S21 is preferably applied to verify the user identification, and the browser window for sending and receiving instant messages is opened only upon successful verification. If the verification of the user identification has failed, instant messaging through browser is not permitted. Alternatively, certain restrictions may be applied to a user whose identification has not been verified. The specific manners of implementation may be set depending on the actual situations, and the present invention does not have any limitations on such manners of implementation.

The verification of user identification may use general techniques used in network authentication. For example, a logon user interface is provided to require the user to enter corresponding ID verification information (e.g., account name, pass code) to verify the identification, and upon successful verification, a browser window is opened for messaging to accomplish instant messaging with the other communication party.

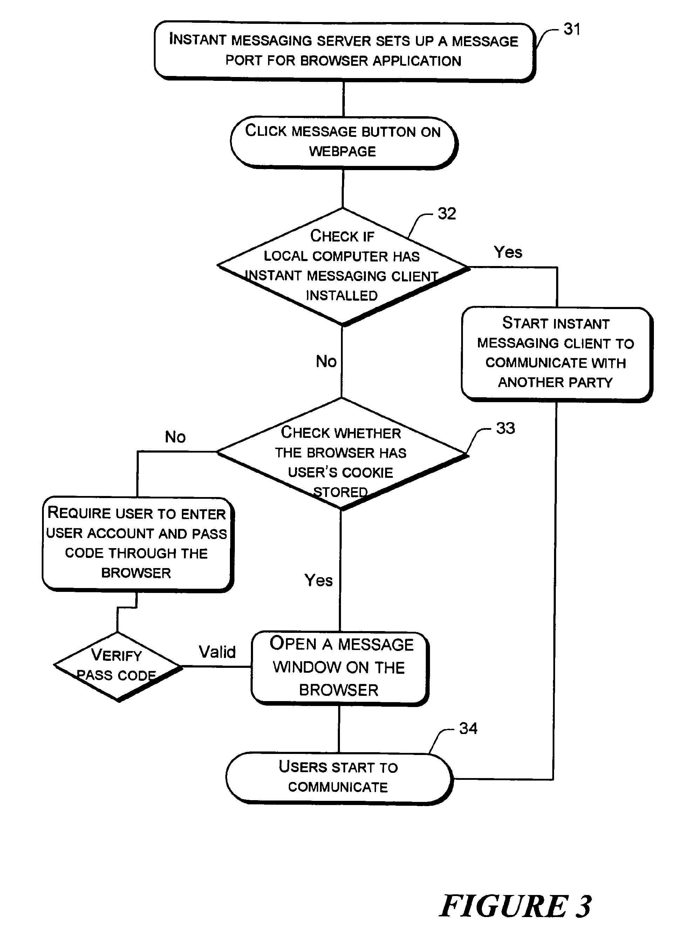

FIG. 3 shows a flow chart of an exemplary embodiment of the instant messaging method in accordance with the present invention.

At step 31, the instant messaging server sets up a message port for a browser application button.

The application button corresponds to the message port of the instant messaging server. The user starts the application by clicking the button. In order for the user to conduct instant messaging with the other communication party, the instant messaging server needs the ID of the other communication party. In general there are two ways to obtain the ID. The first is to provide an input box for the user to enter the ID of the other communication party. The second is to have each button correspond to the ID of one of the communication parties. Clicking the button by the user is equivalent to specifying the corresponding communication party for instant messaging. As the user starts the application, the browser sends the ID of the specified communication party to the instant messaging server.

Using the above second embodiment, each button corresponds to the ID of a communication party. This button corresponds to a certain section of the coding which is pre-implanted in the webpage, as commonly done in existing instant messaging to display on a webpage. For example, browsing products on the website of TaoBao.com, a seller's button is seen aside each product. Clicking this button, one may conduct instant communication with the seller with regard to the product, although existing technology requires that both the seller and the buyer to have installed instant messaging tools or plug-ins in order to use instant messaging to communicate.

Step 32, after the user has clicked the button, checks if the computer of the user has installed an instant messaging client.

Any user, upon seeing on the webpage a messaging button of an instant messaging user, may click the button and let the local computer of the user determine whether the computer presently used by the user has a corresponding instant messaging client installed. If an instant messaging client is installed, the instant messaging client is started to communicate with the other party. If not, the process proceeds to execute step 33.

Step 33 checks whether the browser has stored a cookie containing the identification of the user. If not stored, this step displays a log-in page to require the user to enter ID verification information (e.g., user account, e-mail address, pass code etc.) to verify the identification, and upon successful verification, opens a browser window for a two-party conversation to conduct messaging with the other party. If the browser has stored a cookie of the user's identification, this step directly opens a browser window used for a two-party conversation to conduct conversation with the other party.

Cookie in general refers to small text files created at a user computer by a website. These files are used to store collected website visiting information of the user, including the websites visited, operations executed and any personal information provided.

Cookie is a necessary component to use some websites. A website may use the information in a cookie to provide individualized content, such as local news and weather, popular products, etc.; use cookie to conduct a transaction such as online banking or shopping; and use cookie to collect statistical data, etc.

The cookies used in the present invention may be a cookie generally used on webpage browses. A cookie used in the present invention to store a corresponding user identification may be the resultant cookie based on user actions such as logon and registration when the user browsers the website. As long as the user does not clear the resultant cookie, the next time when the user visits again, the website may obtain, based on the information kept in the cookie, part of the user information such as e-mail address, the user name, etc. The specific content of the cookie should be determined based on the system requirement.

The step 33 is in practice a specific embodiment of the user ID verification process. It is understood that the present invention may use anonymous instant messaging without requiring user logon. In step 33, checking the cookie in the browser is for the purpose of further reducing the time and complexity in user ID verification, in order to allow as close as possible to a single-click operation by the user to accomplish instant messaging communication which is otherwise possible only by installing network instant messaging tools.

In step 34, the user sends and receives instant messages through the browser window to accomplish instant messaging with the other communication party.

After the browser window is opened, the browser window establishes a session with the instant message server, which assigns a session ID to identify the session and notifies the browser of the session ID. The user may enter a message in an input box of the browser page and submit the message. Thereupon, the browser sends the message, the session ID and the ID of the other communication party to the message port of the instant messaging server. Upon receiving the message, the instant messaging server forwards the message to the other communication party. Likewise, upon seeing the message, the other communication party may reply through the instant messaging server. The instant messaging server finds the correct browser window of the user according to the session ID and sends the reply message to the browser window to be displayed in the browser window.

The present invention further provides an instant messaging system which includes an instant messaging server, an instant messaging client, and a browser application module. The browser application module is connected to the message port of the instant messaging server, and is used to open a browser window for sending and receiving instant messages. The user uses the browser window to conduct instant messaging with another communication party which has instant messaging client installed.

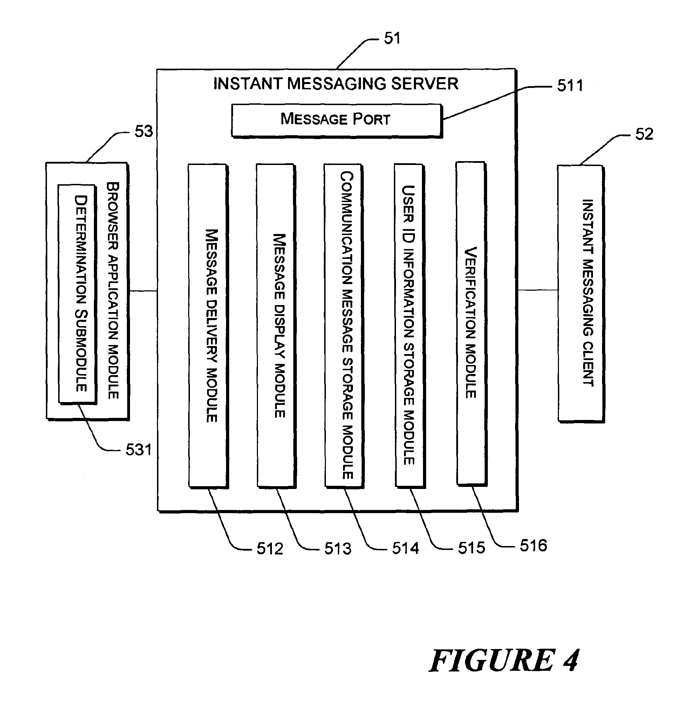

FIG. 4 shows a flow chart of an exemplary embodiment of the instant messaging system in accordance with the present invention. The instant messaging system includes instant messaging server 51, instant messaging client 52 and browser application module 53. The instant messaging server 51 may include message delivery module 512, message display module 513 and message port 511. The browser application module 53 and the message port 511 of the instant messaging server exchange messages. Message delivery module 512 is used for sending communication messages. Message display module 513 is used for displaying the communication messages received.

To assure security of networked instant messaging, the instant messaging server 51 may further include user ID information storage module 515 and verification module 516. The user ID information storage module 515 stores in the instant message system unique user ID information, such as e-mail addresses, identification card numbers and other supplemental information such as pass codes. For example, the user ID information may be stored in a database. After the ID verification information (e.g., e-mail address, and pass code) entered by the user through the browser application module 53 arrives at the verification module 516, the verification module 516 compares the user entered information with the data stored in the ID information database. If the user ID information passes the verification, the communication message sent through the browser application module 53 may reach the message delivery module 512 and/or the message display module 513. If the user ID information fails to pass the verification, the system may reject the operation request by the user or apply restrictions to the user operations.

In order to speed up the user ID verification, the verification module 516 may, through browser application module 53, further check whether the local computer of the user has stored a cookie containing the corresponding identification of the user. If yes, the verification passes. If not, the verification enters a normal verification routine.

In order to prevent the loss of the user communication message or to realize a message-taking function when the other communication party is off-line, the instant messaging server 51 may further include communication message storage module 514, which may store the communication messages sent by the user if the instant messaging client 52 used by the other communication party is off-line. When the other communication party becomes online again the next time, the instant messaging server 51 then delivers the message.

The browser application module 53 may further include determination sub-module 531, which is used for determining, through the user's local computer, whether the computer presently used by the user has an instant messaging client installed. If yes, the instant messaging client is started to communicate with the other communication party.

The message delivery process among the browser application module 53, the instant messaging server 51 and the instant messaging client 52 of the other party is described as follows. Browser application module 53 sends to the instant messaging server 51 a message of the user who has not installed instant messaging client. The instant messaging server 51 delivers the message to the instant messaging client 52 used by the other communication party. Likewise, the server 51 receives a message from the instant messaging client 52, and forwards the message to the browser application module 53, which then displays the message from the instant messaging client 52 on the browser, thus accomplishing instant communication between the two parties.

The above has described in detail an instant message method and system provided by the present invention. The present document uses exemplary embodiments to illustrate the principles and implementations of the present invention. It is understood that the above exemplary embodiments are only for the purpose of assisting the understanding of the method and core concept of the present invention. Furthermore, to those of skills in the art, there exist many variations of the exemplary embodiments and applications based on the core of the present invention. For the foregoing reasons, the present description should not be understood as limitations to the present invention.

## Claims

1. A method of instant messaging, **characterized in that** the method comprises:
establishing a corresponding relationship between a browser application and a message port of an instant messaging server;
starting the browser application to establish a session with the message port of the instant messaging server; and
through the session, sending to the instant messaging server an instant message intended to a communication party, and receiving from the instant messaging server an instant message sent by the communication party.

2. The instant messaging method as recited in claim 1, **characterized in that** the method further comprises, after starting the browser application,
verifying by instant messaging server identification of the user of the browser application; and
upon verification, opening a browser window for sending and receiving instant messages, and establishing a session with the message port of the instant messaging server.

3. The instant messaging method as recited in claim 2, **characterized in that** verifying the identification of the user is specified by: checking whether local computer of the user has a cookie including the identification of user; confirming the verification if result of checking is affirmative; and if the result of checking is negative, displaying an ID verification webpage, and verifying the identification of the user based on information entered by the user.

4. The instant messaging method as recited in claim 1, **characterized in that** the method further comprises, before verifying the identification of the user, determining whether local computer of the user has an instant messaging client installed; if yes, starting the instant messaging client to conduct instant messaging with the communication party.

5. The instant messaging method as recited in claim 1 or claim 2, **characterized in that** the method further comprises: specifying the communication party to the instant messaging server when starting the browser application.

6. The instant messaging method as recited in claim 5, **characterized in that** specifying the communication party comprises: sending to the instant messaging server the communication party's ID entered through the browser window by the user.

7. The instant messaging method as recited in claim 5, **characterized in that** specifying the communication party comprises: setting up in a webpage a button for starting the browser application, wherein the button corresponds to the communication party's ID; and sending the communication party's ID upon user clicking the button.

8. The instant messaging method as recited in claim 1 or claim 2, **characterized in that,** if the communication party is online, the instant messaging server forwards the received instant message to the communication party; and if the communication party is off-line, the instant messaging server stores the received instant message, and forwards the instant message to the communication party when the communication party becomes online.

9. An instant messaging system comprising an instant messaging server and an instant messaging client, **characterized in that** the system further comprises a browser application module connected to a message port of the instant messaging server to be used for establishing a session with the message port, sending through the session to the instant messaging server an instant message intended to a communication party, and receiving from the instant messaging server an instant message sent by the communication party.

10. The instant messaging system as recited in claim 9, **characterized in that** the instant messaging server further includes a verification module used for verifying identification of a user, and for establishing a session with the browser application module of the user upon verifying the identification of the user.

11. The instant messaging system as recited in claim 9, **characterized in that** the browser application module further includes a determination sub-module used for checking, before establishing the session with the browser application module, whether local computer has an instant messaging client installed, and if yes, starting the instant messaging client to interact with the communication party.

12. The instant messaging system as recited in claim 9, **characterized in that** the instant messaging server further includes a communication message storage module used for storing the instant message sent by the browser application module to the communication party if the communication party is off-line, and sending the instant message to the communication party after the communication party has come online.
